# EUROPÄISCHE PATENTSCHRIFT

(11) **EP 2 964 499 B1**
(45) Veröffentlichungstag und Bekanntmachung des Hinweises auf die Patenterteilung: **14.06.2017**
(21) Anmeldenummer: 14707161.7
(22) Anmeldetag: 28.02.2014
(51) Int. Cl.: B60T 13/68, B60T 13/74, B60T 13/66

(54) **BREMSBETÄTIGUNGSEINHEIT**
BRAKE ACTUATION UNIT
UNITÉ D'ACTIONNEMENT DE FREIN

(30) Priorität: 05.03.2013 DE 102013203755; 04.12.2013 DE 102013224870
(43) Veröffentlichungstag der Anmeldung: 13.01.2016
(73) Patentinhaber: Continental Teves AG&Co. Ohg, 60488 Frankfurt (DE)
(72) Erfinder: KURBASA, Josko, 35647 Waldsolms (DE); FEIGEL, Hans-Jörg, 61191 Rosbach (DE)
(86) Internationale Anmeldenummer: PCT/EP2014/053893
(87) Internationale Veröffentlichungsnummer: WO 2014/135446

(56) Entgegenhaltungen:
- DE-A1-102011 017 436
- DE-A1-102011 122 776

## Beschreibung

Die Erfindung betrifft eine Bremsbetätigungseinheit gemäß dem Oberbegriff von Anspruch 1. Eine solche Bremsbetätigungseinheit ist aus DE 102011122776 A bekannt. In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen stattfindet. Aus der internationalen Patentanmeldung WO 2013/023953 A1 ist eine Bremsbetätigungseinheit für eine "Brake-by-wire"-Kraft-fahrzeugbremsanlage bekannt. Dabei sind in der Einheit ein Bremspedal-betätigbarer Hauptbremszylinder, an den die Radbremsen des Kraftfahrzeugs anschließbar sind, eine elektrisch steuerbare Druckbereitstellungseinrichtung, welche als eine hydraulische Zylinder-Kolben-Anordnung ausgeführt ist, deren Kolben durch einen Elektromotor mittels eines Rotations-Translations-Getriebes verschiebbar ist, ein Bremspedalgefühlsimulator, eine Ventil-Anordnung und eine elektronische Steuer- und Regeleinheit angeordnet (sogenanntes "One-Box-Design"). Die Radbremsen werden in einer "Brake-by-wire"-Betriebsart durch die Druckbereitstellungseinrichtung mit Druck beaufschlagt. Schon im Falle eines einzigen Fehlers im Bereich der Druckbereitstellungseinrichtung, insbesondere einer Undichtigkeit der Dichtung des Druckraums der Druckbereitstellungseinrichtung oder einem Fehler in der elektrischen Ansteuerung des Elektromotors der Druckbereitstellungseinrichtung, ist ein Druckaufbau durch die Druckbereitstellungseinrichtung nicht mehr möglich und die Radbremsen können nur noch durch den Fahrzeugführer mittels des Hauptbremszylinders mit Druck beaufschlagt werden. Aufgrund dieser eingeschränkten Verfügbarkeit der Bremsbetätigungseinheit ist diese daher für ein teilautonomes oder autonomes Fahren nicht geeignet.

Es ist Aufgabe der vorliegenden Erfindung, eine Bremsanlage bereitzustellen, mit der die Sicherheitsanforderungen des teilautonomen oder autonomen Fahrens erfüllt werden. Dabei soll aus Kosten- und Bauraumgründen an einer integrierten Bremsbetätigungseinheit (One-Box-Design) mit lediglich einer elektrisch ansteuerbaren Druckbereitstellungseinrichtung und lediglich einer elektronischen Steuer- und Regeleinheit zur Ansteuerung der Bremsbetätigungseinheit, insbesondere der Druckbereitstellungseinrichtung sowie der Ventil-Anordnung, festgehalten werden.

Diese Aufgabe wird erfindungsgemäß durch eine Bremsbetätigungseinheit gemäß Anspruch 1 gelöst.

Der Erfindung liegt der Gedanke zugrunde, dass der Druckraum der Druckbereitstellungseinrichtung nach einer vorgegebenen Betätigung des Kolbens durch ein Zusatzdichtelement gedichtet wird, dass der Elektromotor mindestens zwei, unabhängig voneinander betreibbare Antriebseinheiten mit je zumindest einer Wicklung zum Antreiben des Rotors des Elektromotors aufweist, und dass die elektronischen Steuer- und Regeleinheit einen ersten und einen zweiten Mikrocontroller umfasst, wobei der erste Mikrocontroller zur Ansteuerung einer der Antriebseinheiten des Elektromotors und der zweite Mikrocontroller zur Ansteuerung der anderen der Antriebseinheiten des Elektromotors ausgebildet ist, und wobei der erste und der zweite Mikrocontroller zur Ansteuerung der zweiten Gruppe von Ventilen, welche zum Trennen oder Verbinden der Radbremsen mit dem Hauptbremszylinder oder mit der Druckbereitstellungseinrichtung vorgesehen sind, ausgebildet sind. So kann jeder der Mikrocontroller unabhängig vom anderen Mikrocontroller eine Bremsung mittels der Druckbereitstellungseinrichtung in der "Brake-by-wire"-Betriebsart durchführen.

Bevorzugt ist das Zusatzdichtelement ohne Dichtwirkung, wenn der Kolben in einem unbetätigten Zustand ist.

Bevorzugt wird der Druckraum in einem unbetätigten Zustand des Kolbens durch das Hauptdichtelement gedichtet.

Das Zusatzdichtelement wird bevorzugt nach einer vorgegebenen Betätigung des ersten Kolbens dichtend wirksam.

Bevorzugt ist eine der Antriebseinheiten lediglich durch den ersten Mikrocontroller und die andere Antriebseinheit lediglich durch den zweiten Mikrocontroller ansteuerbar.

Die Erfindung bietet den Vorteil, dass die mit relevanter Wahrscheinlichkeit auftretenden Einzelfehler in Bereich der Druckbereitstellungseinrichtung bzw. deren Ansteuerung nicht zu einem Ausfall der Druckbereitstellungseinrichtung führen. Durch die erfindungsgemäße Kombination der Merkmale wird eine Erhöhung der Verfügbarkeit der Bremsbetätigungseinheit für eine autonome Bremsfunktion auf ausreichende Werte erzielt, ohne dass kostenintensive weiterer Komponenten, wie z.B. eine weitere elektrisch ansteuerbare Druckbereitstellungseinrichtung, eingesetzt werden müssen.

Die Bremsbetätigungseinheit umfasst bevorzugt einen Pedalwegsimulator, welcher dem Fahrzeugführer in einer "Brake-by-wire"-Betriebsart ein angenehmes Bremspedalgefühl vermittelt. Der Pedalwegsimulator ist vorteilhafterweise mittels eines Simulatorfreigabeventils an- und abschaltbar ausgeführt. Das Simulatorfreigabeventil ist von dem ersten und von dem zweiten Mikrocontroller ansteuerbar. Der Pedalwegsimulator ist besonders bevorzugt hydraulisch ausgeführt und mit dem Druckraum des Hauptbremszylinders verbunden oder verbindbar.

Gemäß einer bevorzugten Ausführungsform der Erfindung umfasst die Druckbereitstellungseinrichtung eine in einem Gehäuse angeordnete Stufenbohrung und der Kolben der Druckbereitstellungseinrichtung ist als ein Stufenkolben ausgeführt, dessen Kolbenstufe kleineren Durchmessers nach einer vorgegebenen Betätigung des Stufenkolbens in die Stufe kleineren Durchmessers der Stufenbohrung eintaucht, so dass der Druckraum in einen ersten Druckraumbereich, an welchen der Druckmittelanschluss angeordnet ist, und einen zweiten Druckraumbereich, vorteilhafterweise eine Ringkammer, unterteilt wird.

Bevorzugt werden der erste Druckraumbereich und der zweite Druckraumbereich in dem eingetauchten Zustand der Kolbenstufe durch das Zusatzdichtelement gegeneinander gedichtet.

Bevorzugt ist der zweite Druckraumbereich über ein Hydraulikventil mit dem Druckmittelvorratsbehälter verbindbar.

Das Zusatzdichtelement ist bevorzugt im Gehäuse im Bereich der Bohrungsstufe kleineren Durchmessers befestigt.

Alternativ ist es bevorzugt, dass das Zusatzdichtelement an dem Stufenkolben im Bereich der Kolbenstufe kleineren Durchmessers befestigt ist.

Die erste Gruppe von Ventilen umfasst bevorzugt ein Einlass- und ein Auslassventil je Radbremse.

Gemäß einer bevorzugten Ausführungsform der erfindungsgemäßen Bremsbetätigungseinheit ist die erste Gruppe von Ventilen lediglich von dem ersten Mikrocontroller ansteuerbar. Bei einer durch den zweiten Mikrocontroller gesteuerten Bremsung in der "Brake-by-wire"-Betriebsart ist so dennoch eine Normal-Bremsung möglich. Schlupfregelungsfunktionen oder Fahrdynamikregelfunktionen (wie Funktionen des Antiblockiersystems (ABS), des ESC (Electronic Stability Control) etc.) können bei einer durch den ersten Mikrocontroller gesteuerten Bremsung in der "Brake-by-wire"-Betriebsart uneingeschränkt durchgeführt werden.

Alternativ ist es bevorzugt, dass die den Hinterradbremsen zugeordneten Ventile der ersten Gruppe zusätzlich von dem zweiten Mikrocontroller ansteuerbar sind. So kann auch bei einer in der "Brake-by-wire"-Betriebsart durch den zweiten Mikrocontroller gesteuerten Bremsung eine elektronische Bremskraftverteilung (EBV) durchgeführt werden.

Die Bremsbetätigungseinheit umfasst bevorzugt ein elektrisch betätigbares Diagnoseventil, welches in einer hydraulischen Verbindung zwischen dem Hauptbremszylinder-Druckraum und dem Druckmittelvorratsbehälter angeordnet ist. Das Diagnoseventil ist von zumindest dem ersten Mikrocontroller ansteuerbar.

Gemäß einer Weiterbildung der Erfindung ist die Bremsbetätigungseinheit zur Ansteuerung zumindest eines elektrisch betätigbaren Parkbremsaktuators an zumindest einer der Radbremsen ausgelegt, um im Notfall eine Betriebsbremsung mittels des Parkbremsaktuators durchführen zu können. Besonders bevorzugt ist der Parkbremsaktuator oder sind die Parkbremsaktuatoren lediglich durch den zweiten Mikrocontroller zum Zwecke einer Betriebsbremsung ansteuerbar. Vorteilhafterweise sind durch den zweiten Mikrocontroller die an den Radbremsen der Hinterachse des Kraftfahrzeugs angeordneten elektrisch betätigbaren Parkbremsaktuatoren ansteuerbar.

Bevorzugt sind die Radbremsen in zwei Bremskreisen angeordnet. Die zweite Gruppe von Ventilen, welche von dem ersten und dem zweiten Mikrocontroller ansteuerbar ist, umfasst bevorzugt zumindest ein Trennventil je Bremskreis zum Trennen des Hauptbremszylinders von den Radbremsen des Bremskreises und ein Zuschaltventil je Bremskreis zum Trennen der Druckbereitstellungseinrichtung von den Radbremsen des Bremskreises.

Bevorzugt gehört auch das Simulatorfreigabeventil zu der zweiten Gruppe von Ventilen, welche von dem ersten und dem zweiten Mikrocontroller ansteuerbar ist.

Jeder Bremskreis ist bevorzugt über eine hydraulische Verbindungsleitung mit einem, vorteilhafterweise stromlos offenen, Trennventil mit dem Hauptbremszylinder und über eine weitere hydraulische Verbindungsleitung mit einem, vorteilhafterweise stromlos geschlossenen, Zuschaltventil mit der Druckbereitstellungseinrichtung verbunden.

Gemäß einer bevorzugten Ausführungsform der Erfindung umfasst die Steuer- und Regeleinheit ein erstes und ein zweites elektrisches Anschlusselement, wobei die Steuer- und Regeleinheit über das erste Anschlusselement von zumindest einer ersten elektrischen Energieversorgungseinrichtung und über das zweite Anschlusselement von zumindest einer zweiten elektrischen Energieversorgungseinrichtung mit elektrischer Energie versorgbar ist.

Für eine kostengünstige Energieversorgung der Bremsbetätigungseinheit ist besonders bevorzugt das erste Anschlusselement lediglich von der ersten Energieversorgungseinrichtung und das zweite Anschlusselement lediglich von der zweiten Energieversorgungseinrichtung mit elektrischer Energie versorgbar.

Eine erhöhte Sicherheit in der Versorgung mit elektrischer Energie wird erreicht, indem besonders bevorzugt das erste und das zweite elektrische Anschlusselement jeweils wahlweise von der ersten und der zweiten Energieversorgungseinrichtung mit elektrischer Energie versorgbar ist.

Gemäß einer Weiterbildung der Erfindung umfasst die Bremsbetätigungseinheit zur Erfassung des Fahrerbremswunsches einen ersten Drucksensor zur Erfassung eines Druckes des Hauptbremszylinders und einen zweiten Drucksensor zur Erfassung eines Druckes der Druckbereitstellungseinrichtung, wobei die Signale des ersten Drucksensors lediglich dem ersten Mikrocontroller zugeführt werden und die Signale des zweiten Drucksensors lediglich dem zweiten Mikrocontroller zugeführt werden. Zur Erhöhung der Verfügbarkeit eines Drucksignals ist besonders bevorzugt einer der Drucksensoren oder sind beide Drucksensoren redundant ausgeführt.

Weiterhin umfasst die Bremsbetätigungseinheit bevorzugt einen redundant ausgeführten Wegsensor oder zwei unabhängige Wegsensoren zur Erfassung einer Position des Bremspedals oder eines Hauptbremszylinder-Kolbens. Vorteilhafterweise werden dem ersten und dem zweiten Mikrocontroller jeweils ein Signal des redundanten Wegsensors zugeführt. Im Falle von zwei Wegsensoren wird dem ersten Mikrocontroller das Signal des einen Wegsensors und dem zweiten Mikrocontroller das Signal des anderen Wegsensors zugeführt.

Gemäß einer Weiterbildung der Erfindung umfasst die Bremsbetätigungseinheit zur Kommunikation mit anderen Steuergeräten des Kraftfahrzeugs einen ersten Busanschluss für einen ersten Datenbus und einen zweiten Busanschluss für einen zweiten Datenbus, wobei der erste Busanschluss lediglich mit dem ersten Mikrocontroller und der zweite Busanschluss lediglich mit dem zweiten Mikrocontroller verbunden ist. Weiterhin sind der erste und der zweite Mikrocontroller über einen dritten Datenbus miteinander verbunden. Auch bei Ausfall eines der Datenbusse können so Informationen an beide Mikrocontroller übertragen werden.

Zur Erhöhung der Verfügbarkeit, z.B. für den Fall, dass eines der Anschlusselemente der Bremsbetätigungseinheit nicht richtig verbunden ist, sind der erste Busanschluss und der zweite Busanschluss an verschiedenen elektrischen Anschlusselementen der Bremsbetätigungseinheit angeordnet.

Bevorzugt handelt es sich um eine Bremsanlage für Kraftfahrzeuge, die in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Weitere bevorzugte Ausführungsformen der Erfindung ergeben sich aus den Unteransprüchen und der nachfolgenden Beschreibung anhand von Figuren.

Es zeigen
- Fig. 1: ein stark schematisch dargestelltes, erstes Ausführungsbeispiel einer erfindungsgemäßen Bremsbetätigungseinheit,
- Fig. 2: eine erste beispielsgemäße Steuer- und Regeleinheit einer erfindungsgemäßen Bremsbetätigungseinheit,
- Fig. 3: eine beispielsgemäße Ansteueranordnung für einen beispielsgemäßen Elektromotor einer Druckbereitstellungseinrichtung,
- Fig. 4: schematische Varianten einer Spule mit zwei Windungen, und
- Fig. 5: eine zweite beispielsgemäße Steuer- und Regeleinheit.

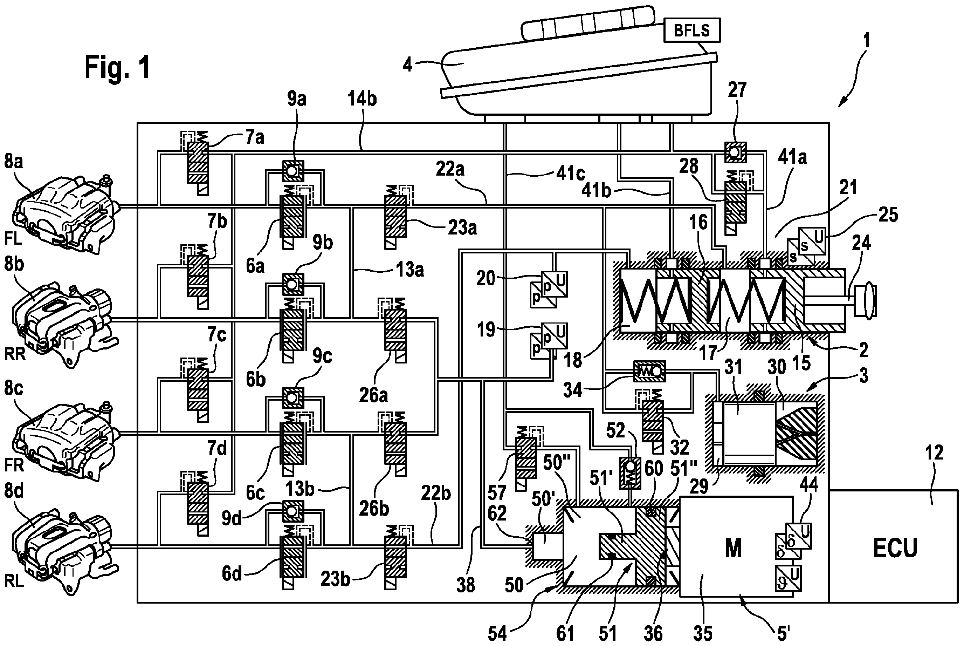

In Fig. 1 ist eine Bremsanlage für Kraftfahrzeuge mit einem ersten Ausführungsbeispiel einer erfindungsgemäßen Bremsbetätigungseinheit stark schematisch dargestellt. Die dargestellte Bremsanlage umfasst die beispielsgemäße Bremsbetätigungseinheit 1 und an die an die Bremsbetätigungseinheit angeschlossenen, hydraulisch betätigbaren Radbremsen 8a-8d.

Bremsbetätigungseinheit 1 umfasst im Wesentlichen einen mittels eines nicht dargestellten Betätigungs- bzw. Bremspedals betätigbaren Hauptbremszylinder 2, einen mit dem Hauptbremszylinder 2 zusammen wirkenden Pedalwegsimulator (Simulationseinrichtung) 3, einen dem Hauptbremszylinder 2 zugeordneten, unter Atmosphärendruck stehenden Druckmittelvorratsbehälter 4, eine elektrisch steuerbare Druckbereitstellungseinrichtung 5, eine erste Gruppe von elektrisch betätigbaren Ventilen 6a-6d, 7a-7d zum Einstellen radindividueller Bremsdrücke, eine zweite Gruppe von elektrisch betätigbaren Ventilen 23a, 23b, 26a, 26b zum Trennen oder Verbinden der Radbremsen 8a-8d mit dem Hauptbremszylinder 2 oder mit der Druckbereitstellungseinrichtung 5 und eine elektronische Steuer- und Regeleinheit 12.

Die erste Gruppe von Ventilen umfasst beispielsgemäß je Radbremse 8a-8d des nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8a-8d angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Bremssystemdruck abgeleitet werden, der in einer an einen Druckraum 50 der elektrisch steuerbaren Druckbereitstellungseinrichtung 5 angeschlossenen Systemdruckleitung 38 vorliegt. Den Einlassventilen 6a-6d ist jeweils ein zu den Bremskreisversorgungsleitungen 13a, 13b hin öffnendes Rückschlagventil 9a-9d parallel geschaltet. In einer Rückfallbetriebsart werden die Bremskreisversorgungsleitungen 13a, 13b über hydraulische Leitungen 22a, 22b mit den Drücken der Druckräume 17, 18 des Hauptbremszylinders 2 beaufschlagt. Die Ausgangsanschlüsse der Auslassventile 7a-7d sind über eine Rücklaufleitung 14b mit dem Druckmittelvorratsbehälter 4 verbunden.

Der Hauptbremszylinder 2 weist in einem Gehäuse 21 zwei hintereinander angeordnete Kolben 15, 16 auf, die Druckräume 17, 18 begrenzen, die zusammen mit den Kolben 15, 16 einen zweikreisigen Hauptbremszylinder bzw. einen Tandemhauptzylinder bilden. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei diese durch eine Relativbewegung der Kolben 17, 18 im Gehäuse 21 absperrbar sind, und andererseits mittels der hydraulischen Leitungen 22a, 22b mit den bereits genannten Bremskreisversorgungsleitungen 13a, 13b in Verbindung, über die die Einlassventile 6a-6d an den Hauptbremszylinder 2 angeschlossen ist. Dabei ist in der Druckausgleichsleitung 41a eine Parallelschaltung eines stromlos offenen (SO-) Diagnoseventils 28 mit einem zum Druckmittelvorratsbehälter 4 hin schließenden Rückschlagventil 27 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

In den an die Druckräume 17, 18 angeschlossenen Leitungsabschnitten 22a, 22b ist je ein Trennventil 23a, 23b angeordnet, welches als je ein elektrisch betätigbares, vorzugsweise stromlos offenes (SO-) Ventil ausgebildet ist. Durch die Trennventile 23a, 23b kann die hydraulische Verbindung zwischen den Druckräumen 17, 18 und den Bremskreisversorgungsleitungen 13a, 13b abgesperrt werden. Ein an den Leitungsabschnitt 22b angeschlossener Drucksensor 20 erfasst den im Hauptbremszylinder 2 aufgebauten Druck.

Gemäß dem Ausführungsbeispiel sind die Radbremsen 8a und 8b dem linken Vorderrad (FL) und dem rechten Hinterrad (RR) zugeordnet und sind mit dem ersten Bremskreis I (13a) verbunden. Die Radbremsen 8c und 8d sind dem rechten Vorderrad (FR) und dem linken Hinterrad (RL) zugeordnet und mit dem zweiten Bremskreis II (13b) verbunden.

Beispielsgemäß umfasst die Bremsanlage (nicht in Fig. 1 dargestellt) zumindest an den Radbremsen 8b, 8d der Hinterräder RR und RL je einen elektrisch betätigbaren Parkbremsaktuator zur Durchführung einer Park- bzw. Feststellbremsung. Der Parkbremsaktuator kann z.B. in Form einer elektromechanischen Bremse ausgeführt sein, die mittels eines Elektromotors eine Bremskraft ausüben kann.

Pedalwegsimulator 3 ist hydraulisch an den Hauptbremszylinder 2 angekoppelt und umfasst im Wesentlichen eine Simulatorkammer 29, eine Simulatorfederkammer 30 sowie einen die beiden Kammern 29, 30 voneinander trennenden Simulatorkolben 31. Simulatorkolben 31 stützt sich durch ein in Simulatorfederkammer 30 angeordnetes elastisches Element am Gehäuse 21 ab. Die Simulatorkammer 29 ist mittels eines elektrisch betätigbaren Simulatorfreigabeventils 32 mit dem ersten Druckraum 17 des Tandemhauptbremszylinders 2 verbindbar. Bei Vorgabe einer Pedalkraft und aktiviertem Simulatorfreigabeventil 32 strömt Druckmittel vom Hauptbremszylinder-Druckraum 17 in die Simulatorkammer 29. Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zum Hauptbremszylinder-Druckraum 17.

Die elektrisch steuerbare Druckbereitstellungseinrichtung 5 ist als eine hydraulische Zylinder-Kolben-Anordnung ausgebildet, deren Kolben 51 von einem schematisch angedeuteten Elektromotor 35 unter Zwischenschaltung eines ebenfalls schematisch dargestellten Rotations-Translationsgetriebes (z.B. ein Kugelgewindetrieb) 36 betätigbar ist. Druckbereitstellungseinrichtung 5 wird beispielsgemäß durch eine in dem Gehäuse 21 angeordnete Stufenbohrung 54, in welcher der gestuft ausgeführte Kolben 51 verschiebbar geführt wird, gebildet. Kolben 51 begrenzt mit dem Gehäuse 21 einen Druckraum 50, der über ein Hauptdichtelement 60 gegen Atmosphärendruck gedichtet wird. Ein Nachsaugen von Druckmittel in den Druckraum 50 ist durch ein Zurückfahren des Kolbens 51 bei geschlossenen Zuschaltventilen 26a, 26b möglich, indem Druckmittel aus dem Druckmittelvorratsbehälter 4 über ein als in Strömungsrichtung zum Aktuator öffnendes Rückschlagventil ausgebildetes Nachsaugventil 52 in den Druckraum 50 strömen kann. An Druckraum 50 ist ein Druckmittelanschluss 62 zur Verbindung mit der Systemdruckleitung 38 und damit zur Verbindung mit den Radbremsen 8a-8d vorgesehen.

Druckbereitstellungseinrichtung 5 umfasst ein Zusatzdichtelement 61, durch welches der Druckraum 50 (im Bereich des Druckmittelanschluss 62) nach einer vorgegebenen Betätigung des Kolbens 51 zusätzlich gedichtet wird. Bei ausreichender Betätigung des Kolbens 51 wird der Druckraum 50 in einen ersten Druckraumbereich 50', in dessen Bereich der Druckmittelanschluss 62 angeordnet ist, und einen zweiten Druckraumbereich 50" (eine Ringkammer) geteilt. Die Druckraumbereiche 50', 50" sind dann über das an der kleineren Kolbenstufe 51' angeordnete Zusatzdichtelement 61 voneinander hydraulisch getrennt. Im zweiten Druckraumbereich 50" ist ein Anschluss vorgesehen, über welchen der Druckraumbereich 50" mit einem elektrisch betätigbaren, stromlos geschlossenen Ventil 57 verbunden ist, welches weiter über Leitung 41c mit dem Druckmittelvorratsbehälter 4 verbunden ist.

Das Zusatzdichtelement 61 ist beispielsgemäß auf dem Kolben 51 (im Bereich 51' der kleineren Stufe / des Zapfens) angeordnet. Der Zapfen / das Kolbenteil 51' mit Zusatzdichtelement 61 kann in die kleinere Bohrung eintauchen.

Alternativ kann das Zusatzdichtelement 61 im Bereich der kleineren Bohrung (d.h. im Druckraumbereich 50') angeordnet sein. Der Zapfen / das Kolbenteil 51' kann in das Dichtelement 61 eintauchen.

Ein Vorteil der zweistufigen Druckbereitstellungseinrichtung 5 ist es, dass bei einer Leckage im Bereich des zweiten Druckraumbereichs 50" bzw. des Hauptdichtelements 60 der Druckaufbau an den Radbremsen 8a-8d über den Druckraum 50 (nämlich Druckraumbereich 50') dennoch durchgeführt werden kann.

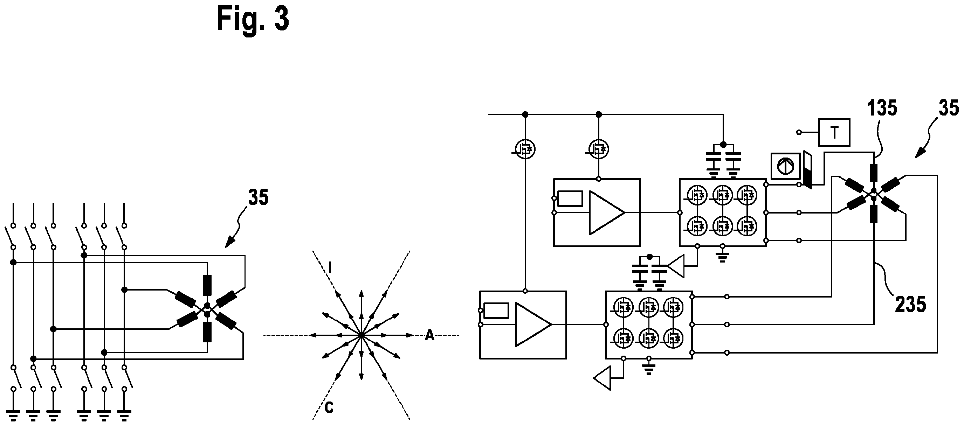

Elektromotor 35 umfasst einen Rotor und einen Stator (nicht in Fig. 1 dargestellt) und ist beispielsgemäß als ein bürstenloser DC-Motor ausgeführt, der zwei, unabhängig voneinander betreibbare Antriebseinheiten mit je einer Wicklung 135, 235 zum Antreiben des Rotors des Elektromotors aufweist. Jede Antriebseinheit ist für sich dazu geeignet, ein Drehmoment auf den Rotor auszuüben und damit die Funktion des Elektromotors aufrecht zu erhalten. Auf diese Weise liegt eine Redundanz an Antriebseinheiten innerhalb des Elektromotors vor, die dazu führt, dass im Falle eines Ausfalls einer Antriebseinheit mit der anderen Antriebseinheit ein ausreichendes Drehmoment erzeugbar ist. Fig. 3 zeigt eine beispielhafte Anordnung der Ansteuerung des Elektromotors 35 mit doppelten Wicklungen 135, 235 und dessen Zeigerschema.

Zur Erfassung einer für die Position/Lage des Kolbens 51 der Druckbereitstellungseinrichtung 5 charakteristischen Größe ist ein Sensor 44 vorhanden, welcher beispielsgemäß als ein der Erfassung der Rotorlage des Elektromotors 35 dienender Rotorlagensensor ausgeführt ist. Andere Sensoren sind ebenso denkbar, z.B. ein Wegsensor zur Erfassung der Position/Lage des Kolbens 51. Anhand der für die Position/Lage des Kolbens 51 charakteristischen Größe ist eine Bestimmung des von der Druckbereitstellungseinrichtung 5 abgegebenen oder aufgenommenen Druckmittelvolumens möglich.

Zum Erfassen des von der Druckbereitstellungseinrichtung 5 erzeugten Bremssystemdruckes ist ein vorzugsweise redundant ausgeführter Drucksensor 19 vorgesehen.

Die einzige elektronische Steuer- und Regeleinheit (ECU) 12 der Bremsanlage dient zur Ansteuerung der Druckbereitstellungseinrichtung 5, der Trennventile 23a, 23b, der Zuschaltventile 26a, 26b, des Simulatorfreigabeventils 32, des Diagnoseventils 28 sowie der Einlass- und Auslassventile 6a-6d, 7a-7d.

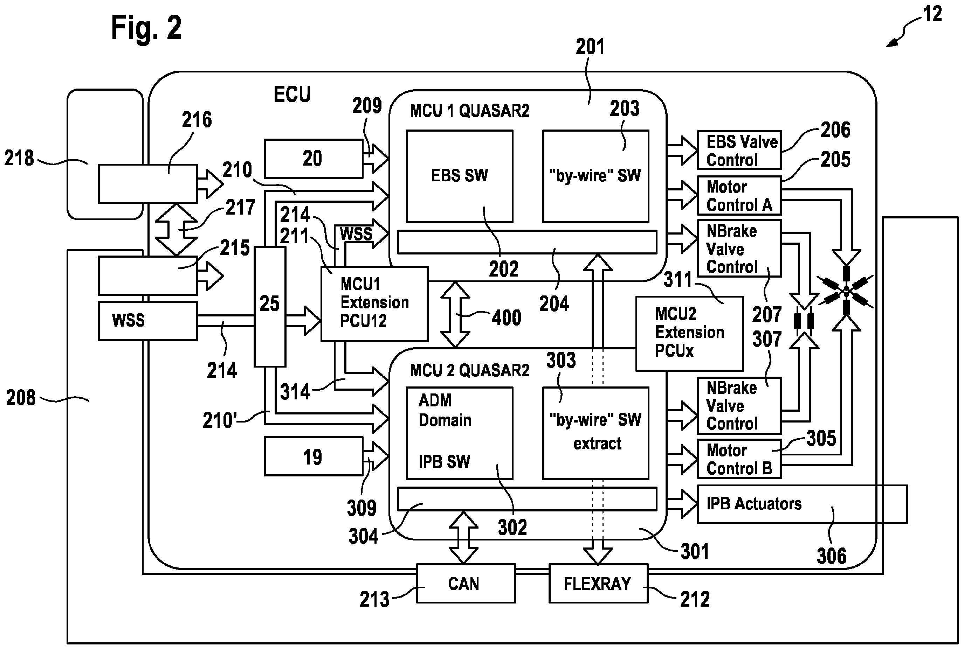

Fig. 2 zeigt eine erste beispielsgemäße Steuer- und Regeleinheit einer erfindungsgemäßen Bremsbetätigungseinheit. Die beispielhafte Architektur der Steuer- und Regeleinheit 12 umfasst einen ersten Mikrocontroller (MCU 1) 201 mit einem Mehrkern-Betriebssystem (MultiCore OS) 204 und einen zweiten Mikrocontroller (MCU 2) 301 mit einem Mehrkern-Betriebssystem (MultiCore OS) 304.

Unter einem Mikrocontroller im Sinne dieser Beschreibung werden auch Mikroprozessoren, Mikrocontrollersysteme sowie Mikroprozessorsysteme verstanden, welche zumindest einen Prozessor aufweisen und über Peripheriefunktionen Signale erfassen sowie ausgeben können.

Der erste Mikrocontroller 201 ist zur Durchführung von an sich bekannten Software-Funktionen 202, die das elektronische Bremssystem betreffen (EBS SW), wie Bremsschlupfregelfunktion (ABS: Antiblockiersystem), Fahrdynamikregelfunktion (ESC: Electronic Stability Control), Traktionskontrollfunktion (TCS: Traction Control System) etc., sowie von "by-wire" spezifischen Software-Funktionen 203 ("by-wire" SW), wie z.B. zur Ansteuerung der Druckbereitstellungseinrichtung 5, ausgebildet.
Die Software-Funktionen 202 betreffen im Wesentlichen die Ansteuerung der Einlass- und Auslassventile 6a-6d, 7a-7d, während die Software-Funktionen 203 im Wesentlichen die Ansteuerung des Elektromotors 35 und der Trenn- und Zuschaltventile 23a, 23b, 26a, 26b sowie des Simulatorfreigabeventils 32 betreffen.

Der zweite Mikrocontroller 301 ist beispielsgemäß zur Durchführung von Software-Funktionen 302, die die Ansteuerung eines

Parkbremsaktuators (IPB (Integrated Parkbrake)) betreffen (IPB SW), sowie von "by-wire" spezifischen Software-Funktionen 303 ("by-wire" SW extract) ausgebildet. Dabei können die durch den zweite Mikrocontroller 301 realisierbaren Software-Funktionen 302 identisch (vollständig redundant) zu den durch den ersten Mikrocontroller 201 realisierbaren Software-Funktionen 202 sein, oder die Software-Funktionen 302 umfassen im Vergleich zu den Software-Funktionen 202 nur einige grundlegenden "by-wire"-Funktionen. Im Fehlerfall des ersten Mikrocontrollers 201 kann so mittels der "by-wire" spezifischen Software-Funktionen 303 zumindest eine Grund-Bremsung in der "Brake-by-wire"-Betriebsart mittels der Druckbereitstellungseinrichtung 5 durchgeführt werden.

Optional werden von den Software-Funktionen 302 des zweiten Mikrocontrollers 301 auch Funktionen (ADM-Domain) umfasst, die die Ansteuerung weiterer, für ein autonomes Fahren (autonomous driving AD) notwendiger Komponenten, z.B. die Lenkung, betreffen. Vorteilhafterweise wird die Software für das autonome Fahrsystem vollständig in den Mikrocontroller 301 (Software-Funktionen 302) der Steuer- und Regeleinheit 12 des Bremssystems integriert.

Die Versorgung der Steuer- und Regeleinheit 12 mit elektrischer Energie ist bevorzugt redundant ausgeführt. Alle elektrischen Bauelemente der Steuer- und Regeleinheit 12 können von einer ersten elektrischen Energieversorgungseinrichtung (Energiequelle) 215 oder einer zweiten elektrischen Energieversorgungseinrichtung (Energiequelle) 216 mit elektrischer Energie versorgt werden.

Beispielsgemäß umfasst die Steuer- und Regeleinheit 12 ein erstes elektrisches Anschlusselement 208, welches auch als System-Anschluss (Systemstecker, System Connector) bezeichnet wird, und ein zweites elektrisches Anschlusselement 218, welches auch als Powerstecker (Power Connector) bezeichnet wird.

Beispielsgemäß wird die Steuer- und Regeleinheit 12 über das erste Anschlusselement 208 mit der ersten Energiequelle 215 und über das zweite Anschlusselement 218 mit der zweiten Energiequelle 216 verbunden.

Vorteilhafterweise ist eine Umschalteinrichtung 217 vorgesehen, mit der die Steuer- und Regeleinheit 12 wahlweise von ersten oder der zweiten Energiequelle versorgt wird.

Beispielsgemäß werden die Signale des Hauptbremszylinder-Drucksensors 20 über eine Verbindung 209 nur dem Mikrocontroller 201 zugeführt, während die Signale des Drucksensors 20 der Druckbereitstellungseinrichtung 5 über eine Verbindung 309 nur dem Mikrocontroller 301 zugeführt werden.

Beispielsgemäß werden die beiden redundanten Signale des Wegsensors 25 zur Erfassung der Bremspedalbetätigung je einem der Mikrocontroller 201, 301 zugeführt, d.h. ein Signal wird dem Mikrocontroller 201 über Leitung 210, das andere Signal dem Mikrocontroller 301 über Leitung 210' bereitgestellt.

Somit liegen mit hoher Wahrscheinlichkeit zumindest einem der beiden Mikrocontroller 201, 301 ein Druck- sowie ein Weg-Signal des Hauptbremszylinders zur Ansteuerung der Druckbereitstellungseinrichtung 5 vor.

Zur Anbindung der Steuer- und Regeleinheit 12 der Bremsanlage an die weiteren Fahrzeugsteuergeräte ist beispielsgemäß Mikrocontroller 201 mit einem ersten Datenbus 212 (beispielsgemäß einem FLEXRAY®-Bus) und Mikrocontroller 301 mit einem zweiten Datenbus 213 (beispielsgemäß einem CAN-Bus) verbunden. Es sind auch andere Bussysteme, z.B. zwei CAN-Busse, denkbar.

Gemäß dem ersten Ausführungsbeispiel der Steuer- und Regeleinheit 12 sind der erste und der zweite Datenbus 212, 213 über das erste Anschlusselement 208 mit der Steuer- und Regeleinheit 12 verbunden.

Die Mikrocontroller 201 und 301 sind vorteilhafterweise über einen dritten Datenbus 400 miteinander verbunden. So können Informationen, z.B. Druckwerte der Drucksensoren, direkt ausgetauscht werden.

Wie oben bereits erläutert umfasst Elektromotor 35 zwei unabhängig voneinander betreibbare Antriebseinheiten mit je einer Wicklung. Zur Ansteuerung des Elektromotors 35 umfasst Mikrocontroller 201 Mittel (Motorsteuerung A, Motor Control A) 205 zur Ansteuerung der einen Antriebseinheit des Elektromotors 35 und Mikrocontroller 301 umfasst Mittel (Motorsteuerung B, Motor Control B) 305 zur Ansteuerung der anderen Antriebseinheit des Elektromotors 35. Im Falle eines Ausfalls der durch Mikrocontroller 201 angesteuerten Antriebseinheit ist mittels der Motorsteuerung 305 des zweiten Mikrocontrollers 301 ein Druckaufbau durch die Druckbereitstellungseinrichtung 5 weiterhin möglich.

Um den durch die Druckbereitstellungseinrichtung 5 bereitgestellten Druck auch an die Radbremsen 8a-8d weiterleiten zu können, umfasst sowohl der erste Mikrocontroller 201 Mittel 207 (Ventilsteuerung Normalbremsung, NBrake Valve Control) sowie der zweite Mikrocontroller 301 Mittel 307 (Ventilsteuerung Normalbremsung, NBrake Valve Control) zur Ansteuerung der Trenn- und Zuschaltventile 23a, 23b, 26a, 26b, mittels welchen die Radbremsen wahlweise mit dem Hauptbremszylinder oder mit der Druckbereitstellungseinrichtung verbunden werden.

Vorteilhafterweise ist auch das Simulatorfreigabeventil 32 ebenfalls von den Ventilsteuerungen 207 und 307 des ersten und zweiten Mikrocontrollers 201, 301 ansteuerbar.

Das Diagnoseventil 28 ist zumindest von der Ventilsteuerung 207 des ersten Mikrocontrollers 201 ansteuerbar; optional kann es von der Ventilsteuerung 307 ansteuerbar ausgebildet sein.

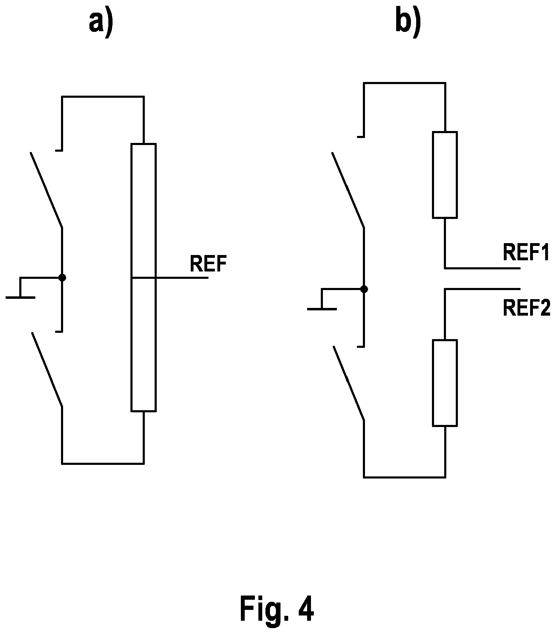

Damit ein Ventil unabhängig von den Mikrocontrollern 201 und 301 betätigt werden kann, umfasst die Ventilspule zwei Windungen. Fig. 4 zeigt schematisch zwei Schaltungsvarianten einer Spule mit zwei Windungen, wobei die Fig. 4 a) eine Sparschaltung und die Fig. 4 b) zwei galvanisch getrennte Wicklungen darstellt.

Beispielsgemäß umfasst nur der erste Mikrocontroller 201 Mittel 206 (Ventilsteuerung elektronisches Bremssystem, EBS Valve Control) zur Ansteuerung der Einlass- und Auslassventile 6a-6d, 7a-7d der Bremsbetätigungseinheit 1.

Alternativ ist es vorteilhaft, dass die Einlass- und Auslassventile 6b, 6d, 7b, 7d der Hinterradbremsen 8b, 8c zusätzlich von der Ventilsteuerung 307 des zweiten Mikrocontrollers 301 ansteuerbar sind. So kann auch im Fehlerfall des Mikrocontrollers 201 eine elektronische Bremskraftverteilung über eine Druckregelung an den Hinterradbremsen durchgeführt werden.

Zur Unterstützung einer durch den zweiten Mikrocontroller 301 gesteuerten Betriebsbremsung, umfasst Mikrocontroller 301 beispielsgemäß Mittel 306 (IPB Actuators) zur Ansteuerung zumindest eines elektrisch betätigbaren Parkbremsaktuators (IPB: Integrated Parkbrake). Bei einer Bremsanlage mit an den Radbremsen 8b, 8d der Hinterräder angeordneten Parkbremsaktuatoren werden diese im Notfall mittels der Ansteuerung 306 von dem Mikrocontroller 301 betätigt.

Beispielsgemäß ist dem Mikrocontroller 201 eine erste Leistungssteuereinheit 211, welche z.B. eine Fehlererkennungslogik (Failsafe-Logik) für den Mikrocontroller 201 und Ventiltreiberstufen für die Einlass- und Auslassventile 6a-6d, 7a-7d, die Trenn- und Zuschaltventile 23a, 23b, 26a, 26b, das Simulatorfreigabeventil 32 und das Diagnoseventil 28 umfasst, zugeordnet. Entsprechend ist Mikrocontroller 301 mit einer zweiten Leistungssteuereinheit 311 verbunden, wobei diese z.B. neben einer Fehlererkennungslogik (Failsafe-Logik) für Mikrocontroller 301 Ventiltreiberstufen nur für die Trenn- und Zuschaltventile 23a, 23b, 26a, 26b, das Simulatorfreigabeventil 32 und optional das Diagnoseventil 28 umfasst. Der ersten Leistungssteuereinheit 211 werden beispielsgemäß die Signale der Raddrehzahlsensoren WSS (Wheel Speed Sensor) aller Räder des Kraftfahrzeugs zugeführt. Die Signale aller Raddrehzahlsensoren werden so dem ersten Mikrocontroller 201 zur Verfügung gestellt (Verbindungen 214). Optional werden die Signale der Raddrehzahlsensoren der Hinterräder dem zweiten Mikrocontroller 301 zugeleitet (Verbindung 314).

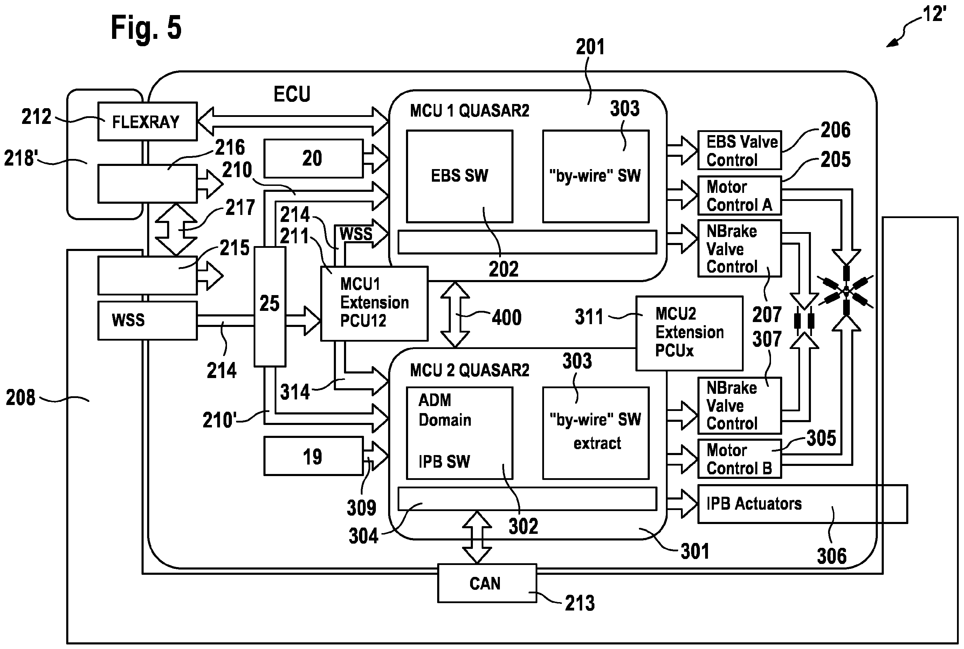

Fig. 5 zeigt eine zweite beispielsgemäße Steuer- und Regeleinheit 12' einer erfindungsgemäßen Bremsbetätigungseinheit. Die Architektur der Steuer- und Regeleinheit 12' entspricht im Wesentlichen der des ersten Ausführungsbeispiels der Fig. 2. Sich entsprechende Komponenten sind mit denselben Bezugszeichen versehen. Auch hier ist Mikrocontroller 201 mit dem ersten Datenbus 212 (beispielsgemäß einem FLEXRAY®-Bus) und Mikrocontroller 301 mit dem zweiten Datenbus 213 (beispielsgemäß einem CAN-Bus) verbunden. Im Unterschied zum Ausführungsbeispiel der Fig. 2 sind die Datenbusse 212, 213 über verschiedene Anschlusselemente 218', 208 mit der Steuer- und Regeleinheit 12' verbunden. Beispielsgemäß ist der erste Datenbus 212 über das zweite Anschlusselement 218' (Powerstecker) und der zweite Datenbus 213 über das erste Anschlusselement 208 (Systemstecker) mit der Steuer- und Regeleinheit 12 verbunden.

Die Architektur der Steuer- und Regeleinheit 12 bzw. 12' umfasst ein Zweiprozessorsystem 201, 301, bei dem jedes Teilsystem der Architektur 201, 205, 206, 207; 301, 305, 306, 307 eine autonome Bremsung durchführen kann. Hierzu sind bevorzugt die für eine Normalbremsung notwendigen Ventilschaltungen (siehe Fig. 4) und Ansteuerungen (207, 307) sowie Motorwicklungen (135, 235) bzw. Motoransteuerungen (205, 206) des Elektromotors 35 redundant ausgeführt.

Die Druckbereitstellungseinrichtung 5 ist zweistufig ausgeführt so dass bei einem Ausfall der Hauptdichtung 60 noch die Zusatzdichtung 61 der zweiten Stufe genutzt werden kann. Dazu fährt der Kolben 51 im Schadensfall soweit vor, bis die Zusatzdichtung 61 wirksam wird und ein Druckaufbau an den Radbremsen gewährleistet werden kann. Ein schlafender Fehler dieser Dichtung kann durch Prüfroutinen detektiert werden.

Im Zusammenhang mit der redundanten Motoransteuerung 205, 206, die zwei unabhängige Motorwicklungen 135, 235 und zugehörige redundante Ansteuerungen (205, 305), Logikschaltungen, Kommunikationskanäle und Sensorsignalauswertungen (203, 303) mit den notwendigen redundanten Ventilschaltungen enthält, wird eine für das autonome Fahren hinreichende Verfügbarkeit des autonomen Druckaufbaus in den Radbremsen erzielt.

## Patentansprüche

1. Bremsbetätigungseinheit (1) für eine "Brake-by-wire"-Kraftfahrzeugbremsanlage mit
• einem Bremspedal-betätigbaren Hauptbremszylinder (2) mit zumindest einem Hauptbremszylinder-Druckraum (17, 18), an den hydraulisch betätigbare Radbremsen (8a-8d) des Kraftfahrzeugs anschließbar sind, einem dem Hauptbremszylinder zugeordneten, unter Atmosphärendruck stehenden Druckmittelvorratsbehälter (4),
• einer elektrisch steuerbaren Druckbereitstellungseinrichtung (5), welche durch eine hydraulische Zylinder-Kolben-Anordnung gebildet wird, deren Kolben (51) durch einen Elektromotor (35) mit einem Rotor und einem Stator betätigbar ist, wobei der Kolben einen Druckraum (50) begrenzt, der durch ein Hauptdichtelement (60) gegen Atmosphäre gedichtet wird und der einen Druckmittelanschluss (62) zur Verbindung mit den Radbremsen aufweist,
• einer ersten Gruppe von elektrisch betätigbaren Ventilen (6a-6d, 7a-7d) zum Einstellen radindividueller Bremsdrücke,
• einer zweiten Gruppe von elektrisch betätigbaren Ventilen (23a, 23b, 26a, 26b) zum Trennen oder Verbinden der Radbremsen mit dem Hauptbremszylinder oder mit der Druckbereitstellungseinrichtung, und
• einer elektronischen Steuer- und Regeleinheit (12, 12') zur Ansteuerung der Druckbereitstellungseinrichtung, der ersten Gruppe von Ventilen und der zweiten Gruppe von Ventilen,
**dadurch gekennzeichnet, dass** der Druckraum (50) nach einer vorgegebenen Betätigung des Kolbens (51) durch ein Zusatzdichtelement (61) gedichtet wird, dass der Elektromotor mindestens zwei, unabhängig voneinander betreibbare Antriebseinheiten mit je zumindest einer Wicklung zum Antreiben des Rotors des Elektromotors aufweist, und dass die elektronische Steuer- und Regeleinheit einen ersten (201) und einen zweiten (301) Mikrocontroller umfasst, wobei der erste Mikrocontroller zur Ansteuerung (205), insbesondere lediglich, einer der Antriebseinheiten des Elektromotors und der zweite Mikrocontroller zur Ansteuerung (305), insbesondere lediglich, der anderen der Antriebseinheiten des Elektromotors ausgebildet ist, und wobei der erste und der zweite Mikrocontroller zur Ansteuerung (207, 307) der zweiten Gruppe von Ventilen ausgebildet sind.

2. Bremsbetätigungseinheit nach Anspruch 1, **dadurch gekennzeichnet, dass** diese einen Pedalwegsimulator (3) umfasst, welcher dem Fahrzeugführer in einer "Brake-by-wire"-Betriebsart ein angenehmes Bremspedalgefühl vermittelt und welcher mittels eines Simulatorfreigabeventils (32) an- und abschaltbar ausgeführt ist, wobei das Simulatorfreigabeventil ebenfalls von dem ersten und dem zweiten Mikrocontroller ansteuerbar ist (207, 307).

3. Bremsbetätigungseinheit nach Anspruch 1 oder 2, **dadurch gekennzeichnet, dass** die Druckbereitstellungseinrichtung (5) eine in einem Gehäuse (21) angeordnete Stufenbohrung umfasst und der Kolben (51) als Stufenkolben ausgeführt ist, dessen Kolbenstufe kleineren Durchmessers (51') nach einer vorgegebenen Betätigung des Stufenkolbens in die Stufe kleineren Durchmessers der Stufenbohrung eintaucht, so dass der Druckraum (50) in einen ersten Druckraumbereich (50'), an welchem der Druckmittelanschluss (62) angeordnet ist, und einen zweiten Druckraumbereich (50"), insbesondere eine Ringkammer, unterteilt wird.

4. Bremsbetätigungseinheit nach Anspruch 3, **dadurch gekennzeichnet, dass** der erste Druckraumbereich (50') und der zweite Druckraumbereich (50") in dem eingetauchten Zustand der Kolbenstufe durch das Zusatzdichtelement (61) gegeneinander gedichtet werden.

5. Bremsbetätigungseinheit nach einem der Ansprüche 1 bis 4, **dadurch gekennzeichnet, dass** die erste Gruppe von Ventilen (6a-6d, 7a-7d), insbesondere lediglich, von dem ersten Mikrocontroller ansteuerbar ist (206), wobei die erste Gruppe von Ventilen insbesondere ein Einlass- und ein Auslassventil je Radbremse umfasst.

6. Bremsbetätigungseinheit nach Ansprüche 5, **dadurch gekennzeichnet, dass** lediglich die den Hinterradbremsen (8b, 8d) zugeordneten Ventile der ersten Gruppe (6b, 6d, 7b, 7d) zusätzlich von dem zweiten Mikrocontroller ansteuerbar sind (307).

7. Bremsbetätigungseinheit nach einem der Ansprüche 1 bis 6, **dadurch gekennzeichnet, dass** diese ein elektrisch betätigbares Diagnoseventil (28) umfasst, welches in einer hydraulischen Verbindung (41a) zwischen dem Hauptbremszylinder-Druckraum (17) und dem Druckmittelvorratsbehälter (4) angeordnet ist, wobei das Diagnoseventil von zumindest dem ersten Mikrocontroller ansteuerbar ist (207).

8. Bremsbetätigungseinheit nach einem der Ansprüche 1 bis 7, **dadurch gekennzeichnet, dass** lediglich durch den zweiten Mikrocontroller ein elektrisch betätigbarer Parkbremsaktuator an zumindest einer der Radbremsen (8b, 8d) ansteuerbar ist (306), insbesondere die an den Radbremsen der Hinterachse des Kraftfahrzeugs angeordneten elektrisch betätigbaren Parkbremsaktuatoren ansteuerbar sind.

9. Bremsbetätigungseinheit nach einem der Ansprüche 1 bis 8, **dadurch gekennzeichnet, dass** die Radbremsen in zwei Bremskreisen (13a, 13b) angeordnet sind und dass die zweite Gruppe von Ventilen, welche von dem ersten und dem zweiten Mikrocontroller ansteuerbar ist, zumindest ein Trennventil (23a, 23b) je Bremskreis zum Trennen des Hauptbremszylinders (2) von den Radbremsen (8a, 8b; 8c, 8d) des Bremskreises und ein Zuschaltventil (26a, 26b) je Bremskreis zum Trennen der Druckbereitstellungseinrichtung (5) von den Radbremsen des Bremskreises umfasst.

10. Bremsbetätigungseinheit nach einem der Ansprüche 1 bis 9, **dadurch gekennzeichnet, dass** die Steuer- und Regeleinheit (12) ein erstes und ein zweites elektrisches Anschlusselement (208, 218) umfasst, wobei die Steuer- und Regeleinheit (12) über das erste Anschlusselement (208) von zumindest einer ersten elektrischen Energieversorgungseinrichtung (215) und über das zweite Anschlusselement (218) von zumindest einer zweiten elektrischen Energieversorgungseinrichtung (216) mit elektrischer Energie versorgbar ist.

11. Bremsbetätigungseinheit nach einem der Ansprüche 1 bis 10, **dadurch gekennzeichnet, dass** diese einen, insbesondere redundant ausgeführten, ersten Drucksensor (20) zur Erfassung eines Druckes des Hauptbremszylinders (2) und einen, insbesondere redundant ausgeführten, zweiten Drucksensor (19) zur Erfassung eines Druckes der Druckbereitstellungseinrichtung (5) umfasst, wobei die Signale des ersten Drucksensors lediglich dem ersten Mikrocontroller zugeführt werden (209) und die Signale des zweiten Drucksensors lediglich dem zweiten Mikrocontroller zugeführt werden (309).

12. Bremsbetätigungseinheit nach einem der Ansprüche 1 bis 11, **dadurch gekennzeichnet, dass** diese einen redundant ausgeführten Wegsensor (25) oder zwei Wegsensoren zur Erfassung einer Position des Bremspedals oder eines Hauptbremszylinder-Kolbens (15) umfasst, wobei dem ersten und dem zweiten Mikrocontroller jeweils zumindest ein Signal des Wegsensors oder der Wegsensoren zugeführt wird (210).

13. Bremsbetätigungseinheit nach einem der Ansprüche 1 bis 12, **dadurch gekennzeichnet, dass** ein erster Busanschluss für einen ersten Datenbus (212) und ein zweiter Busanschluss für einen zweiten Datenbus (213) vorgesehen ist, wobei der erste Busanschluss lediglich mit dem ersten Mikrocontroller und der zweite Busanschluss lediglich mit dem zweiten Mikrocontroller verbunden ist, und dass der erste und der zweite Mikrocontroller über einen dritten Datenbus (400) miteinander verbunden sind.

14. Bremsbetätigungseinheit nach Anspruch 13, **dadurch gekennzeichnet, dass** der erste Busanschluss und der zweite Busanschluss auf verschiedenen elektrischen Anschlusselementen (208, 218) angeordnet sind.

## Claims

1. Brake actuation unit (1) for a brake-by-wire motor vehicle brake system having
• a brake-pedal-actuable master brake cylinder (2) having at least one master brake cylinder pressure space (17, 18) to which hydraulically actuable wheel brakes (8a-8d) of the motor vehicle can be connected, a pressure medium reservoir vessel (4) which is assigned to the master brake cylinder and is under atmospheric pressure,
• an electrically controllable pressure supply device (5) which is formed by a hydraulic cylinder-piston arrangement whose piston (51) can be actuated by an electric motor (35) having a rotor and a stator, wherein the piston bounds a pressure space (50) which is sealed with respect to the atmosphere by a main sealing element (60) and which has a pressure medium connection (62) for connecting to the wheel brakes,
• a first group of electrically actuable valves (6a-6d, 7a-7d) for setting wheel-specific brake pressures,
• a second group of electrically actuable valves (23a, 23b, 26a, 26b) for disconnecting or connecting the wheel brakes from or to the master brake cylinder or from or to the pressure supply device, and
• an electronic open-loop and closed-loop control unit (12, 12') for activating the pressure supply device, the first group of valves and the second group of valves,
**characterized in that** after a predefined actuation of the piston (51) the pressure space (50) is sealed by an additional sealing element (61), **in that** the electric motor has at least two drive units which can be operated independently of one another and each have at least one winding for driving the rotor of the electric motor, and **in that** the electronic open-loop and closed-loop control unit comprises a first microcontroller (201) and a second microcontroller (301), wherein the first microcontroller is designed to activate (205), in particular only, one of the drive units of the electric motor, and the second microcontroller is designed to activate (305), in particular only, the other of the drive units of the electric motor, and wherein the first and second microcontrollers are designed to activate (207, 307) the second group of valves.

2. Brake actuation unit according to Claim 1, **characterized in that** said brake actuation unit comprises a pedal travel simulator (3) which gives the vehicle driver a pleasant brake pedal sensation in a brake-by-wire operating mode and which is embodied so as to be capable of being switched on and off by means of a simulator enabling valve (32), wherein the simulator enabling valve can also be activated by the first and second microcontrollers (207, 307).

3. Brake actuation unit according to Claim 1 or 2, **characterized in that** the pressure supply device (5) comprises a stepped bore arranged in a housing (21), and the piston (51) is embodied as a stepped piston whose piston step with a smaller diameter (51') dips into the step with a smaller diameter of the stepped bore after predefined actuation of the stepped piston, with the result that the pressure space (50) is divided into a first pressure space area (50') at which the pressure medium connection (62) is arranged, and a second pressure space area (50"), in particular an annular chamber.

4. Brake actuation unit according to Claim 3, **characterized in that** in the dipped-in state of the piston step the first pressure space area (50') and the second pressure space area (50") are sealed with respect to one another by the additional sealing element (61).

5. Brake actuation unit according to one of Claims 1 to 4, **characterized in that** the first group of valves (6a-6d, 7a-7d) can be activated (206), in particular only, by the first microcontroller, wherein the first group of valves comprises, in particular, one inlet valve and one outlet valve per wheel brake.

6. Brake actuation unit according to Claim 5, **characterized in that** only the valves of the first group (6b, 6d, 7b, 7d), assigned to the rear wheel brakes (8b, 8d), can be additionally activated by the second microcontroller (307).

7. Brake actuation unit according to one of Claims 1 to 6, **characterized in that** said brake actuation unit comprises an electrically actuable diagnostic valve (28) which is arranged in a hydraulic connection (41a) between the master brake cylinder pressure space (17) and the pressure medium reservoir vessel (4), wherein the diagnostic valve can be activated (207) by at least the first microcontroller.

8. Brake actuation unit according to one of Claims 1 to 7, **characterized in that** an electrically actuable parking brake actuator on at least one of the wheel brakes (8b, 8d) can be activated (306), in particular the electrically actuable parking brake actuators which are arranged on the wheel brakes of the rear axle of the motor vehicle, can be activated only by the second microcontroller.

9. Brake actuation unit according to one of Claims 1 to 8, **characterized in that** the wheel brakes are arranged in two brake circuits (13a, 13b), and **in that** the second group of valves which can be activated by the first and second microcontrollers comprises at least one isolating valve (23a, 23b) per brake circuit for disconnecting the master brake cylinder (2) from the wheel brakes (8a, 8b; 8c, 8d) of the brake circuit, and a sequence valve (26a, 26b) per brake circuit for disconnecting the pressure supply device (5) from the wheel brakes of the brake circuit.

10. Brake actuation unit according to one of Claims 1 to 9, **characterized in that** the open-loop and closed-loop control unit (12) comprises a first and a second electrical connecting element (208, 218), wherein the open-loop and closed-loop control unit (12) can be supplied with electrical energy from at least a first electrical energy supply device (215) via the first connecting element (208), and from at least a second electrical energy supply device (216) via the second connecting element (218).

11. Brake actuation unit according to one of Claims 1 to 10, **characterized in that** said brake actuation unit has a first pressure sensor (20), in particular embodied redundantly, for detecting a pressure of the master brake cylinder (2), and a second pressure sensor (19), in particular embodied redundantly, for detecting a pressure of the pressure supply device (5), wherein the signals of the first pressure sensor are fed (209) only to the first microcontroller, and the signals of the second pressure sensor are fed (309) only to the second microcontroller.

12. Brake actuation unit according to one of Claims 1 to 11, **characterized in that** said brake actuation unit comprises a redundantly embodied travel sensor (25) or two travel sensors for detecting a position of the brake pedal or of a master brake cylinder piston (15), wherein in each case at least one signal of the travel sensor or travel sensors is fed (210) to the first and the second microcontrollers.

13. Brake actuation unit according to one of Claims 1 to 12, **characterized in that** a first bus connection for a first databus (212) and a second bus connection for a second databus (213) are provided, wherein the first bus connection is connected only to the first microcontroller, and the second bus connection is connected only to the second microcontroller, and **in that** the first and second microcontrollers are connected to one another via a third databus (400).

14. Brake actuation unit according to Claim 13, **characterized in that** the first bus connection and the second bus connection are arranged on different electrical connecting elements (208, 218).

## Revendications

1. Unité d'actionnement de frein (1) pour un système de freinage "à commande électronique" d'un véhicule à moteur, comprenant
- un maître-cylindre de frein (2) pouvant être actionné par une pédale de frein, comportant au moins une chambre de compression de maître-cylindre de frein (17, 18) à laquelle peuvent être reliés des freins de roues (8a-8d) du véhicule automobile pouvant être actionnés de manière hydraulique, un réservoir de fluide de pression associé (4) au maître-cylindre de frein et exposé à la pression atmosphérique,
- un dispositif générateur de pression (5) pouvant être commandé électriquement, constitué par un système cylindre-piston hydraulique, dont le piston (51) peut être actionné par un moteur électrique (35) comportant un rotor et un stator, dans lequel le piston délimite une chambre de compression (50) isolée de manière étanche vis-à-vis de l'atmosphère par un élément d'étanchéité principal (60) et qui comporte un raccord pour fluide de pression (62) destiné à être relié aux freins de roues,
- un premier groupe de soupapes (6a-6b, 7a-7b) pouvant être actionnées électriquement pour le réglage des pressions de freinage individuelles sur les roues,
- un deuxième groupe de soupapes (23a, 23b, 26a, 26b) pouvant être actionnées électriquement pour interrompre ou établir la communication entre les freins de roues et le maître-cylindre de frein ou le dispositif générateur de pression, et
- une unité électronique de commande et de régulation (12, 12') pour commander le dispositif générateur de pression, le premier groupe de soupapes et le deuxième groupe de soupapes,
**caractérisée en ce que** la chambre de compression (50) est isolée de manière étanche par un élément d'étanchéité supplémentaire (61) après un actionnement prédéterminé du piston (51), **en ce que** le moteur électrique comporte au moins deux unités d'entraînement pouvant être mises en fonctionnement indépendamment l'une de l'autre, comportant chacune au moins un enroulement destiné à entraîner le rotor du moteur électrique, et **en ce que** l'unité électronique de commande et de régulation comprend des premier (201) et deuxième (301) microcontrôleurs, dans lequel le premier microcontrôleur est conçu pour commander (205), en particulier de manière unique, l'une des unités d'entraînement du moteur électrique et le deuxième microcontrôleur est conçu pour commander (305), en particulier de manière unique, l'autre des unités d'entraînement du moteur électrique, et dans lequel les premier et deuxième microcontrôleurs sont conçus pour commander (207, 307) le deuxième groupe de soupapes.

2. Unité d'actionnement de frein selon la revendication 1, **caractérisée en ce qu'**elle comprend un simulateur de course de pédale (3) qui procure au conducteur du véhicule, par un mode de fonctionnement du type "système de freinage à commande électronique", une sensation de pédale de frein agréable et qui est réalisée de manière à pouvoir être activée et désactivée au moyen d'une soupape de déclenchement de simulateur (32), dans lequel la soupape de déclenchement de simulateur peut également être commandée (207, 307) par les premier et deuxième microcontrôleurs.

3. Unité d'actionnement de frein selon la revendication 1 ou 2, **caractérisée en ce que** le dispositif générateur de pression (5) comprend un alésage étagé disposé dans un boîtier (21) et **en ce que** le piston (51) est réalisé sous la forme d'un piston étagé dont l'étage de piston de plus faible diamètre (51') plonge, après un actionnement prédéterminé du piston étagé, jusqu'à l'étage de plus petit diamètre de l'alésage étagé, de manière à ce que la chambre de compression (50) soit subdivisée en une première zone de chambre de compression (50') sur laquelle est disposé le raccord de fluide de pression (62), et en une deuxième zone de chambre de compression (50"), en particulier une chambre annulaire.

4. Unité d'actionnement de frein selon la revendication 3, **caractérisée en ce que** la première zone de chambre de compression (50') et la deuxième zone de chambre de compression (50") sont isolées l'une de l'autre de manière étanche par l'élément d'étanchéité supplémentaire (61) dans l'état inséré de l'étage de piston.

5. Unité d'actionnement de frein selon l'une quelconque des revendications 1 à 4, **caractérisée en ce que** le premier groupe de soupapes (6a-6b, 7a-7b) peut être commandé (206), notamment de manière unique, par le premier microcontrôleur, dans lequel le premier groupe de soupapes comprend en particulier une soupape d'entrée et une soupape de sortie pour chaque frein de roue.

6. Unité d'actionnement de frein selon la revendication 5, **caractérisée en ce que** les soupapes du premier groupe (6b, 6d, 7b, 7d) associées aux freins de roues arrière (8b, 8d) sont en outre) seules à pouvoir être commandées (307) par le deuxième microcontrôleur.

7. Unité d'actionnement de frein selon l'une quelconque des revendications 1 à 6, **caractérisée en ce qu'**elle comprend une soupape de diagnostic (28) pouvant être actionnée électriquement, qui est mise en liaison hydraulique (41a) entre la chambre de compression de maître-cylindre de frein (17) et le réservoir de fluide de pression (4), dans lequel la soupape de diagnostic peut être commandée (207) par au moins le premier microcontrôleur.

8. Unité d'actionnement de frein selon l'une quelconque des revendications 1 à 7, **caractérisée en ce qu'**un actionneur de frein de stationnement pouvant être actionné électriquement uniquement par le deuxième microcontrôleur peut être commandé (306) sur au moins l'un des freins de roues (8b, 8d) et plus particulièrement, **en ce que** les actionneurs de freins de stationnement disposés sur les freins de roues de l'essieu arrière du véhicule automobile peuvent être commandés.

9. Unité d'actionnement de frein selon l'une quelconque des revendications 1 à 8, **caractérisée en ce que** les freins de roues sont disposés dans deux circuits de freinage (13a, 13b) et **en ce que** le deuxième groupe de soupapes qui peut être commandé par les premier et deuxième microcontrôleurs comprend au moins une soupape de séparation (23a, 23b) pour chaque circuit de freinage afin de séparer le maître cylindre de frein (2) des freins de roues (8a, 8b ; 8c, 8d) du circuit de freinage et une soupape de mise en circuit (26a, 26b) pour chaque circuit de freinage, permettant de séparer le dispositif générateur de pression (5) des freins de roues du circuit de freinage.

10. Unité d'actionnement de frein selon l'une quelconque des revendications 1 à 9, **caractérisée en ce que** l'unité de commande et de régulation (12) comprend des premier et deuxième éléments de raccordement électriques (208, 218), dans lequel l'unité de commande et de régulation (12) peut être alimentée en énergie électrique par l'intermédiaire du premier élément de raccordement (208), par au moins un premier dispositif d'alimentation en énergie électrique (215) et, par l'intermédiaire du deuxième élément de raccordement (218), par au moins un deuxième dispositif d'alimentation en énergie électrique (216).

11. Unité d'actionnement de frein selon l'une quelconque des revendications 1 à 10, **caractérisée en ce qu'**elle comprend un premier capteur de pression (20), notamment réalisé de manière redondante, pour détecter une pression du maître-cylindre de frein (2) et un deuxième capteur de pression (19), notamment réalisé de manière redondante, pour détecter une pression du dispositif générateur de pression (5), dans lequel les signaux du premier capteur de pression sont uniquement (209) fournis au premier microcontrôleur et les signaux du deuxième capteur de pression sont uniquement fournis (309) au deuxième microcontrôleur.

12. Unité d'actionnement de frein selon l'une quelconque des revendications 1 à 11, **caractérisée en ce qu'**elle comprend un capteur de course (25) réalisé de manière redondante ou deux capteurs de course pour détecter une position de la pédale de frein ou d'un piston de maître-cylindre de frein (15), dans lequel au moins un signal du capteur de course ou des capteurs de course est respectivement fourni (210) aux premier et deuxième microcontrôleurs.

13. Unité d'actionnement de frein selon l'une quelconque des revendications 1 à 12, **caractérisée en ce qu'**il est prévu un premier raccord de bus destiné à un premier bus de données (212) et un deuxième raccord de bus destiné à un deuxième bus de données (213), dans lequel le premier raccord de bus est uniquement relié au premier microcontrôleur et le deuxième raccord de bus est uniquement relié au deuxième microcontrôleur, et **en ce que** les premier et deuxième microcontrôleurs sont reliés l'un à l'autre par l'intermédiaire d'un troisième bus de données (400).

14. Unité d'actionnement de frein selon la revendication 13, **caractérisée en ce que** le premier raccord de bus et le deuxième raccord de bus sont disposés sur des éléments de raccordement (208, 218) électriquement différents.
